# EUROPEAN PATENT APPLICATION

(11) **EP 4 718 202 A1**
(43) Date of publication of application: **01.04.2026**
(21) Application number: 24202772.0
(22) Date of filing: 26.09.2024
(51) Int. Cl.: G05G 5/03, F16C 11/10, G05G 9/047

(54) **A TWIST DEVICE REGULATOR**

(71) Applicant: FC Technologies, MB, 03150 Vilnius (LT)
(72) Inventor: Dumcius, Povilas, 03150 Vilnius (LT); Krukovski, Tomas, 03150 Vilnius (LT)
(74) Representative: Metida

(57) **Abstract**

This invention relates to a rotation regulator for twist devices used in applications such as levers, joysticks, or handbrakes. It features a central stem (1) that withstands rotational forces, with a static enclosure (4) securely fixed to the top of the stem and a dynamic enclosure (3) that rotates around the same axis, supported by a bearing (12) for smooth motion. A spring (5) is attached to the static enclosure, generating the necessary load during rotational movements. The device also includes a gasket (7) positioned on the stem to minimize friction and provide rotational resistance. Lower and upper brackets (8, 9), attached to the dynamic enclosure, form a movable jaw-like structure around the stem. A socket head cap screw (16) adjusts the pressure applied by the brackets, allowing for precise control of the dynamic enclosure's rotational resistance. This adjustable resistance makes the device highly customizable, offering fine-tuned control for various manual applications requiring smooth and regulated rotational movement.

## Description

### FIELD OF THE INVENTION

This invention relates to a rotation regulator for twist devices used in applications such as levers, joysticks, or handbrakes, where precise rotational control, adjustable resistance, and feedback on the rotational angle are required. It incorporates features that allow smooth rotation, controlled resistance, and secure locking.

### BACKGROUND

In the current landscape of manually operated control devices, such as levers, joysticks, and handbrakes, several persistent challenges affect performance, user experience, and adaptability. A major issue is the lack of adjustability in twist resistance in traditional devices. This limitation prevents users from customizing the device's feel and responsiveness to match their specific needs or preferences. Also, significant challenge is the difficulty in achieving precise control. Fixed resistance settings do not provide the fine-tuned control required for tasks that demand high precision, such as in gaming or industrial operations, resulting in reduced performance and accuracy.

User discomfort and fatigue also pose substantial problems, especially during prolonged use. The inability to adjust resistance leads to strain, discomfort, and potential ergonomic issues, making traditional devices less user-friendly over time.

There is a need for an innovative, manually operated device designed for applications like levers, joysticks, and handbrakes. This device should allow motion along its axis in both directions, offering enhanced control and adjustability to meet the demands of precision tasks and user-specific preferences.

The complexity involved in adjusting or modifying, in known devices, often requiring disassembly or part replacement, adds to the maintenance burden, reducing overall efficiency and user satisfaction.

JPH07213741 (A) describes a computer game control device, particularly for flight simulation. It eliminates the need for complex setups like foot pedals by integrating yaw control into the joystick through a twisting motion, making the device simpler and more accessible. However, it lacks adjustable resistance and damping, which are crucial for precision and user comfort.

WO2024105395 (A1) describes a thumbstick adapter for game controllers, which allows users to customize how they engage with a thumbstick through interchangeable, user-specific controls. While this adapter improves the adaptability and usability of thumbsticks, it primarily focuses on altering the shape, size, and engagement method of the thumbstick without addressing the resistance or damping of the control mechanism. It lacks the ability to adjust resistance and provide precise control, which are critical for enhancing user experience, comfort, and performance across various applications. The prior art documents focus on enhancing the adaptability and usability of control devices like thumbsticks and joysticks. For example, WO2024105395 (A1) introduces customizable adapters for thumbsticks, improving user engagement by altering the shape and size, while JPH07213741 (A) simplifies flight simulation controls by integrating yaw control into the joystick. However, these inventions primarily target physical modifications and basic customization without addressing the need for adjustable resistance and damping.

Rotational control in devices like joysticks or handbrakes is crucial for accurate user input. Conventional systems lack mechanisms to adjust resistance, secure the rotational components, or measure the rotational angle with precision. This invention addresses these limitations by offering a robust, adjustable, and sensor-equipped rotation regulator.

### SUMMARY OF THE DISCLOSURE

The invention addresses several key challenges through a manually operated twist device regulator. By offering customizable resistance, it minimizes user discomfort and fatigue during prolonged use, thereby improving ergonomic efficiency. The precise control provided by the adjustable damping mechanism is essential for tasks requiring high accuracy, such as in gaming or industrial applications, where fixed resistance can impair performance.

The twist device comprises a central stem, functioning as the primary shaft, which provides a stable and secure connection for the entire mechanism. The stem is securely fixed in position. The device includes a static enclosure, mounted at the top of the stem, acting as the non-rotating base. Additionally, there is a dynamic enclosure that rotates around the axis of the stem, facilitated by a bearing system to ensure smooth rotational motion.

A spring is secured to the static enclosure with a screw and flat spacer, interacting with both static and dynamic enclosures to generate the necessary load during rotation operation.

A gasket is placed on the stem to reduce friction between the dynamic enclosure and the stem, ensuring smooth movement and rotational resistance when clamped from the outer side.

The design also features lower and upper brackets, which were attached to the dynamic enclosure, embracing the stem and gasket to form a movable jaw-like structure. A socket head cap screw is used to tighten the brackets, enabling precise adjustment of rotational resistance by varying the clamping pressure on the stem with the gasket. By adjusting this screw, users can fine-tune the resistance to meet specific application requirements. Additionally, the device comprises a cone point that can lock the dynamic enclosure relative to the static enclosure, preventing unwanted rotation for increased stability when the device is in a fixed position.

Also, it can be equipped with printed circuit board (PCB) which is fixed to the dynamic enclosure, above the static enclosure housing a sensor that reads the rotation angle, essential for applications requiring precise feedback. A magnet, attached on the static enclosure, interacts with the sensor to provide accurate angle readings, making the device suitable for high-precision tasks like gaming or industrial controls.

Overall, this twist regulator offers a customizable, user-friendly solution for manual control, featuring adjustable damping, precise control, and ergonomic enhancements. Its component interactions ensure it meets diverse needs across various fields, from entertainment to industrial operations.

### BRIEF DESCRIPTION OF THE DRAWINGS

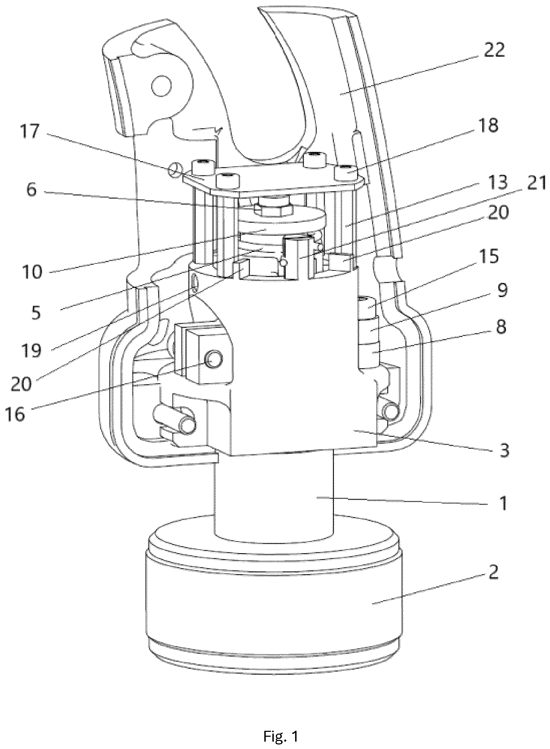

Fig. 1 Example of twist for application such as levers, joysticks, or handbrakes mounting with a twist device regulator

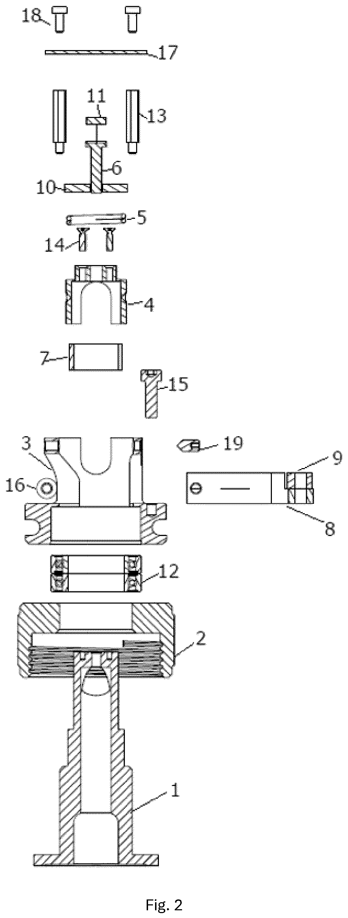

Fig. 2 Exploded side view of the example of twist for application such as levers, joysticks, or handbrakes mounting with a twist device regulator

### List of reference signs:

1 - stem; 2 - nut; 3 - dynamic enclosure; 4 - static enclosure; 5 - spring; 6 - screw; 7 - gasket; 8 - lower bracket; 9 - upper bracket; 10 - flat spacer; 11 - magnet; 12 - bearing; 13 - printed circuit board (PCB) stands; 14 - screw; 15 - screw; 16 - socket head cap screw; 17 - PCB; 18 - socket head cap screw; 19 - hexagon socket set screw with cone point; 20 - spring stoper; 21 -spring pusher; 22 - twist handle.

### DETAILED DESCRIPTION OF THE INVENTION

For a better explanation of the essence and the characteristics of the invention, the detailed description of rotation regulator for twist device for applications such as levers, joysticks, handbrakes or similar. The device incorporates several innovative features that enhance its performance, versatility, and user experience. The device provides precise rotational resistance control, which can be adjusted from outside of the device as required by the user. It incorporates several mechanical elements that work together to achieve smooth rotation with customizable resistance. It should be understood that numerous specific details are presented to provide a complete and comprehensible description of the invention embodiment. However, the person skilled in the art will understand that the embodiment examples do not limit the application of the invention, which can be implemented without these specific instructions.

The twist device comprises a stem (1) which serves as the central shaft of the device, providing a secure connection for the entire mechanism. It is fixed into place with a nut (2), which uses a threaded connection to clamp the stem (1) through splines located in the contact zone. This ensures a reliable firm connection that allows the mechanism to operate smoothly during rotational motion.

Also twist device comprises a static enclosure (4) and a dynamic enclosure (3). The static enclosure (4) firmly fixed on the top of a stem (1) by a screw (6) and serves as the non-rotating base of the device, while the dynamic enclosure (3) is located on the stem (1), fitted on static enclosure (4) and sharing the same axis, allowing it to rotate relative to the static enclosure (4). The dynamic enclosure (3) is the rotating by a bearing (12) which enabling the smooth rotation of the dynamic enclosure (3) around the stem (1) axis.

A spring (5) is secured on the static enclosure (4) by a screw (6) and a flat spacer (10) it interacts with both the static and dynamic enclosures (3, 4) and generates primary required load during turning operation of the twist handle (22), with the dynamic enclosure (3) housing a spring stoper (20) and a spring pusher (21).

In this invention a gasket (7) is located on the stem (1) it minimizes friction between the dynamic enclosures (3) and the stem (1), serving to reduce friction during rotational movement. The gasket's (7) material properties ensure smooth movement, also ensures rotational resistance during the rotation movement when it is tightly clamped from the outer side.

The invention also comprises a lower bracket (8) and an upper bracket (9), which are attached to the dynamic enclosure (3) via a screw (15), the lower bracket (8) embracing the stem (1) with the gasket (7) from one side, and the upper bracket (9) embracing the stem (1) with the gasket (7) from other side, forming a jaw-like movable structure.

A socket head cap screw (16) positioned perpendicular to the axis of the stem (1) and out of the dynamic enclosure (3) for tightening the lower and upper brackets (8, 9) together, till securing the stem (1) with the gasket (7) and enabling precise adjustment of rotational resistance of the dynamic enclosure (3) relative to the stem (1). By tightening or loosening this screw (16), the user can adjust the pressure exerted on the stem (1), thereby regulating the rotational resistance. This allows for fine-tuned control externally depending on the specific application requirements.

Additionally, the device can incorporate a cone point (19), which is configured to lock the dynamic enclosure (4) relative to the static enclosure (3) when required. The cone point (19) prevents unintended rotation, offering additional stability and control when the twist device is set in a fixed position.

A printed circuit board (PCB) (17), which houses the sensor that reads the rotation angle of the device, is fixed to the dynamic enclosure (3) by screws (18) the stands (13) for PCB supporting above the static enclosure (4). This sensor is for applications that require precise feedback on the device's position.

A magnet (11) attached to a screw (6); the magnet (11) interacts with the sensor on the PCB board (17) to provide accurate readings of the rotation angle. This feature is essential for tasks requiring high precision, such as in gaming or industrial controls.

The invention twist regulator provides a highly customizable and user-friendly solution for manual control applications. Its innovative design, incorporating adjustable damping, precise control, and ergonomic features, makes it superior to traditional devices. The detailed interaction of its components ensures that it meets the diverse needs of users across various fields, from gaming to industrial operations.

## Claims

1. Rotation regulator for twist device for applications such as levers, joysticks, or handbrakes comprising:
a stem (1) that can withstand rotational forces;
a static enclosure (4), firmly fixed on the top of the stem (1);
a dynamic enclosure (3) located on the stem (1), fitted on static enclosure (4) sharing the same axis, allowing it to rotate relative to the static enclosure (4);
a bearing (12) for enabling the smooth rotation of the dynamic enclosure (3) around the stem (1) axis;
a spring (5) fixed to the static enclosure (4) which interacts with the dynamic enclosure (3) for creating a load between static enclosure (4) and dynamic enclosure (3), during twist rotation;
**characterized in that**,
gasket (7) located on the stem (1);
a lower bracket (8) and an upper bracket (9) are attached to the dynamic enclosure (3) by a screw (15), the lower bracket (8) embracing the stem (1)with a gasket (7) from one side, and the upper bracket (9) embracing the stem (1) with a gasket (7) from other side, forming a jaw-like movable structure;
a socket head cap screw (16), positioned perpendicular to the axis of the stem (1) and out of the dynamic enclosure (3) for tightening the lower and upper brackets (8, 9) together, till securing the stem (1) with the gasket (7) and enabling precise adjustment of rotational resistance of the dynamic enclosure (3) relative to the stem (1), when the gasket (7) ensures rotational resistance during the rotation when it is tightly clamped from the outer side.

2. The rotation regulator according to claim 1, further comprising a point configured to lock the rotation of the dynamic enclosure (3) relative to the static enclosure (4) where in the static enclosure (4) is a cone cavity and in dynamic enclosure (3) is a hole and through which a screw with cone point (19) is inserted to the cone cavity of the static enclosure (4).

3. The rotation regulator according to any of claims 1 or 2, **characterized in that** a magnet (11) is mounted on the static enclosure (4), and a printed circuit board (17) with sensor system is mounted on the dynamic enclosure (3), configured to provide precise measurement and control of rotation angle of the dynamic enclosure (3) relative to the static enclosure (4).
